# EUROPÄISCHE PATENTSCHRIFT

(11) **EP 3 769 923 B1**
(45) Veröffentlichungstag und Bekanntmachung des Hinweises auf die Patenterteilung: **14.06.2023**
(21) Anmeldenummer: 19188621.7
(22) Anmeldetag: 26.07.2019
(51) Int. Cl.: B27B 17/02

(54) **FÜHRUNGSSCHIENE FÜR EINE MOTORKETTENSÄGE UND VERFAHREN ZUR HERSTELLUNG EINER FÜHRUNGSSCHIENE**
GUIDE RAIL FOR A MOTOR CHAIN SAW AND METHOD FOR PRODUCING A GUIDE RAIL
RAIL DE GUIDAGE POUR UNE TRONÇONNEUSE À CHAÎNE ET PROCÉDÉ DE FABRICATION D'UN RAIL DE GUIDAGE

(43) Veröffentlichungstag der Anmeldung: 27.01.2021
(73) Patentinhaber: Andreas Stihl AG & Co. KG, 71336 Waiblingen (DE)
(72) Erfinder: LUX, Thomas, 73553 Aldorf (DE); LEIENDECKER, Martin, 73037 Göppingen (DE); MITREGA, David, 71364 Winnenden (DE)
(74) Vertreter: Reinhardt, Annette

(56) Entgegenhaltungen:
- WO-A1-93/08968
- DE-A1- 3 939 203
- FR-A- 1 378 471
- US-A- 4 138 813
- US-A- 4 641 432
- US-A- 5 052 109
- US-A1- 2013 031 793

## Beschreibung

Die Erfindung betrifft eine Führungsschiene für eine Motorkettensäge der im Oberbegriff des Anspruchs 1 angegebenen Gattung sowie ein Verfahren zur Herstellung einer Führungsschiene.

Führungsschienen für Motorkettensägen unterliegen im Betrieb hohem Verschleiß. Insbesondere der Umlenkabschnitt der Führungsschiene ist aufgrund der hohen mechanischen Belastung im Betrieb stark verschleißbehaftet. Zur Verringerung des Verschleißes ist es im Stand der Technik bekannt, an der Schienenspitze einen drehbar gelagerten Umlenkstern am Umlenkabschnitt anzuordnen. Aus der EP 2 550 138 B1 ist auch bekannt, an der Schienenspitze einen gehärteten Einsatz oder dgl. vorzusehen. Der Aufbau derartiger Schienen ist jedoch vergleichsweise komplex.

Aus der EP 0 013 802 A1 geht eine Führungsschiene hervor, bei der sich die Seitenplatten vom Einspannabschnitt zum Umlenkabschnitt erstrecken und bei der die Seitenplatten den Umlenkabschnitt bilden. Zum Stand der Technik ist hier ausgeführt, dass der Umlenkbereich bei Führungsschienen gehärtet sein kann.

Aus der US 5,052,109 A geht eine Führungsschiene hervor, an deren Schienenspitze ein Umlenkstern angeordnet ist. Die Führungsflächen an den Längsseiten der Führungsschiene sind gehärtet oder mit Stellit beschichtet. Benachbart zum Einspannabschnitt der Führungsschiene ist eine Biegezone mit verringerter Härte vorgesehen.

Die US 4,641,432 A offenbart eine Führungsschiene gemäß dem Oberbegriff des Anspruchs 1, die aus einer Mittelplatte und zwei

Seitenplatten aufgebaut sein kann. Die Mittelplatte kann sich dabei bis zum Umlenkabschnitt erstrecken und im Umlenkabschnitt den Boden der Führungsnut bilden.

Auch aus der FR 1 378 471 A und der US 4,138,813 A gehen Führungsschienen hervor, die keinen Umlenkstern aufweisen. Bei diesen Dokumenten sind die Seitenplatten miteinander verbunden und bilden so den Boden der Führungsnut.

Der Erfindung liegt die Aufgabe zugrunde, eine Führungsschiene der gattungsgemäßen

Art anzugeben, die einen einfachen Aufbau und einen verringerten Verschleiß aufweist. Eine weitere Aufgabe der Erfindung besteht darin, ein Verfahren zur Herstellung einer solchen Führungsschiene anzugeben.

Diese Aufgabe wird bezüglich der Führungsschiene mit einer Führungsschiene mit den Merkmalen des Anspruchs 1 gelöst. Bezüglich des Verfahrens zur Herstellung einer Führungsschiene wird die Aufgabe durch ein Verfahren mit den Merkmalen des Anspruchs 9 gelöst.

Es hat sich gezeigt, dass durch Härten der an den Seitenplatten ausgebildeten Führungsflächen sowohl an den Längsseiten als auch an der Schienenspitze eine erhebliche Verringerung der Verschleißanfälligkeit der Führungsschiene erreicht werden kann. Sowohl an den Längsseiten als auch an der Schienenspitze weist eine Führungsschiene vorzugsweise zumindest je einen gehärteten Bereich mit gegenüber einem Mittelbereich der Seitenplatten erhöhter Härte auf. Der Mittelbereich der Seitenplatten umfasst zumindest den Bereich, in dem die Längsmittelachse der Führungsschiene in einer Seitenansicht senkrecht auf die Ebene der Seitenplatten in einem Längsabschnitt der Führungsschiene, der zwischen Einspannabschnitt und Umlenkabschnitt angeordnet ist, verläuft. Die Härte des Mittelbereichs der Seitenplatten entspricht vorzugsweise der Härte des Grundmaterials der Seitenplatten vor dem Härten an den Längsseiten und an der Schienenspitze.

Der Mittelbereich erstreckt sich vorteilhaft zwischen den Längsseiten der Führungsschiene über mindestens 50%, insbesondere mindestens 80% der Höhe der Führungsschiene. Die Höhe der Führungsschiene ist dabei parallel zur Ebene der Führungsschiene und senkrecht zur Längsmittelachse der Führungsschiene gemessen.

Die Führungsflächen sind die Flächen, an denen sich die Sägekette an der Führungsschiene abstützt. Die Sägekette ist über den gesamten Umlenkbereich an den Führungsflächen geführt. Vorteilhaft ist die Sägekette auch über die gesamte Länge des Längsabschnitts an beiden Längsseiten der Führungsschiene an den Führungsflächen abgestützt. Der Längsabschnitt erstreckt sich dabei zwischen Umlenkabschnitt und Einspannabschnitt und grenzt an Umlenkabschnitt und Einspannabschnitt an. In vorteilhafter Gestaltung erstrecken sich die Führungsflächen durchgehend und ohne Unterbrechung an einer Längsseite vom Einspannabschnitt über den Längsabschnitt bis zum Umlenkabschnitt, über den gesamten Umlenkabschnitt und an der anderen Längsseite vom Umlenkabschnitt und den Längsabschnitt zurück bis zum Einspannabschnitt.

Der gehärtete Bereich weist vorteilhaft eine senkrecht zur Führungsfläche gemessene Tiefe auf, die mindestens 0,5 mm beträgt. Die Tiefe beträgt vorzugsweise mindestens 1 mm. Vorzugsweise ist die Tiefe kleiner als 20 mm. Die Tiefe des gehärteten Bereichs ist vorzugsweise kleiner als die Tiefe der Führungsnut. Der gehärtete Bereich erstreckt sich demnach nicht bis an den Boden der Führungsnut.

An den Führungsflächen zwischen den Längsseiten und dem Umlenkabschnitt erstreckt sich jeweils ein Zwischenbereich, der eine geringere Härte als der gehärtete Bereich aufweist. Der Zwischenbereich erlaubt eine sehr einfache Herstellung der gehärteten Bereiche an den Längsseiten und dem Umlenkabschnitt. Die gehärteten Bereiche an Längsseiten und Umlenkabschnitt können so hergestellt werden, dass die gehärteten Bereiche sich überlappen, insbesondere geringfügig überlappen. Der Überlappungsbereich bildet den Zwischenbereich, da sich die beiden Härtezonen gegenseitig beeinflussen, wodurch im Zwischenbereich eine geringere Härte resultiert. Der Zwischenbereich ist vorzugsweise mit Abstand zur Schienenspitze angeordnet. Der Zwischenbereich ist vorzugsweise so positioniert, dass in dem Zwischenbereich eine vergleichsweise geringe Belastung zu erwarten ist. Der Zwischenbereich ist in einem Abstand zur Schienenspitze angeordnet, der von 40% bis 70% der Höhe der Führungsschiene beträgt und/oder weist eine parallel zur Längsmittelachse gemessene Länge von weniger als 20 mm auf. Die Höhe der Führungsschiene ist dabei an einer Seitenplatte, also an einer Flachseite der Führungsschiene und parallel zur Ebene der Führungsschiene, und senkrecht zur Längsmittelachse der Führungsschiene gemessen. Die Ebene der Führungsschiene ist die Ebene, die die Längsmittelachse enthält und mittig zwischen den Seitenplatten bzw. parallel zu den Außenseiten der Führungsschiene verläuft. Die Flachseite der Führungsschiene bildet eine Außenseite der Führungsschiene, die an der Seitenplatte verläuft.

Der Umlenkabschnitt wird vorzugsweise als der Bereich definiert, der sich von der Schienenspitze aus bis zu einer Ebene erstreckt, die senkrecht zur Längsmittelachse durch den Punkt verläuft, in dem der Radius mindestens einer Führungsfläche 100 mm beträgt. Der Umlenkabschnitt erstreckt sich über den am freien Ende der Führungsschiene angeordneten Bereich der Führungsschiene, in dem der Radius der Führungsfläche kleiner als 100 mm ist. Der Bereich der Führungsschiene, an dem die Führungsflächen einen Radius von mehr als 100 mm aufweisen, wird demnach nicht mehr als Teil des Umlenkabschnitts betrachtet. In diesem außerhalb des Umlenkabschnitts liegenden Bereich verlaufen die Führungsflächen vergleichsweise gerade und folgen näherungsweise dem Verlauf der Längsmittelachse der Führungsschiene. Am Übergang vom Umlenkabschnitt zum Längsabschnitt geht der Radius der Führungsflächen von einem Radius, der kleiner als 100 mm ist, zu einem Radius über, der größer als 100 mm ist. Der Zwischenbereich ist vorzugsweise so angeordnet, dass er mindestens teilweise außerhalb des Umlenkabschnitts angeordnet ist.

Zwischen dem Umlenkabschnitt und dem Einspannabschnitt liegt vorzugsweise ein Längsabschnitt. Vorzugsweise liegen mindestens 10%, insbesondere mindestens 50%, bevorzugt mindestens 90% der parallel zur Längsmittelachse gemessenen Länge des Zwischenbereichs im Längsabschnitt. Dadurch, dass der Zwischenbereich mindestens teilweise, insbesondere über mindestens 10%, vorzugsweise über deutlich mehr als 10% seiner Länge außerhalb des Umlenkabschnitts liegt, wird erreicht, dass die Führungsfläche im Umlenkabschnitt weitgehend durch den gehärteten Bereich gebildet ist. Dadurch kann der Verschleiß am freien Ende der Führungsschiene verringert werden. Vorteilhaft weist der Zwischenbereich eine parallel zur Längsmittelachse gemessene Länge von weniger als 20 mm auf. Dadurch, dass der Zwischenbereich vergleichsweise kurz ausgebildet ist, kann mit einfachen Härteverfahren eine weitgehend gehärtete Führungsfläche an beiden Seitenplatten erzeugt werden. Vorzugsweise ist die Länge des Zwischenbereichs kleiner als 15 mm, bevorzugt kleiner als 10 mm.

Die senkrecht zur Führungsfläche gemessene Tiefe des Zwischenbereichs ist vorzugsweise kleiner als die Tiefe der Führungsnut. Der Zwischenbereich ragt demnach nicht bis zum Boden der Führungsnut. Die Tiefe des Zwischenbereichs beträgt vorzugsweise weniger als 20%, insbesondere weniger als 10%, vorzugsweise weniger als 5% der Höhe der Führungsschiene.

Vorteilhaft weist die Führungsschiene einen zwischen den Seitenplatten angeordneten Mittelabschnitt auf. Der Mittelabschnitt bildet im Umlenkabschnitt den Boden der Führungsnut. Der Boden der Führungsnut ist vorzugsweise durchgängig vom Einspannabschnitt über den Längsabschnitt zum Umlenkabschnitt und auf der gegenüberliegenden Längsseite der Führungsschiene vom Umlenkabschnitt über den Längsabschnitt zum Einspannabschnitt am Mittelabschnitt ausgebildet und lediglich durch eventuell vorhandene Ölzuführöffnungen unterbrochen.

In vorteilhafter Gestaltung ist der Mittelabschnitt mit mindestens einer Seitenplatte der Führungsschiene als einteiliges Element ausgebildet. Besonders vorteilhaft sind beide Seitenplatten und der Mittelabschnitt einteilig ausgebildet. Es kann jedoch auch vorgesehen sein, dass der Mittelabschnitt mit einer der Seitenplatten einteilig ausgebildet ist und die andere Seitenplatte separat ausgebildet ist oder, dass ein Teil des Mittelabschnitts mit einer Seitenplatte und ein Teil des Mittelabschnitts mit der anderen Seitenplatte einteilig ausgebildet ist.

In vorteilhafter alternativer Gestaltung kann vorgesehen sein, dass der Mittelabschnitt und die Seitenplatten separat voneinander ausgebildet sind. Der Mittelabschnitt ist insbesondere als zwischen den Seitenplatten angeordnete Mittelplatte ausgebildet. Der Mittelabschnitt und die Seitenplatten sind vorteilhaft durch Schweißpunkte miteinander verbunden. Der gehärtete Bereich weist zu den Schweißpunkten vorzugsweise einen Abstand auf. Der Abstand zwischen dem gehärteten Bereich und den Schweißpunkten beträgt vorzugsweise mindestens 3 mm, vorteilhaft mindestens 5 mm.

Für ein Verfahren zur Herstellung einer Führungsschiene für eine Motorkettensäge ist vorgesehen, dass die Führungsschiene sowohl an den Längsseiten als auch an der Schienenspitze induktiv gehärtet wird. Eine induktive Härtung kann auf einfache Weise durchgeführt werden.

In einem Verfahrensschritt wird die Schienenspitze gehärtet, und in einem anderen, zeitlich getrennt erfolgenden Verfahrensschritt werden die Längsseiten gehärtet. Das Härten der Längsseiten erfolgt dabei insbesondere nach dem Härten der Schienenspitze. In alternativer Gestaltung kann jedoch auch vorgesehen sein, dass das Härten der Längsseiten vor dem Härten der Schienenspitze erfolgt. Das Härten des Umlenkabschnitts erfolgt in einer ersten Härtezone und das Härten der Längsseiten in mindestens einer zweiten Härtezone. Die erste Härtezone und die mindestens eine zweite Härtezone überlappen sich vorteilhaft in mindestens einem Überlappungsbereich. Nach dem Härten einer der Härtezonen von erster Härtezone und zweiter Härtezone wird das Material in dem Überlappungsbereich beim Härten der anderen Härtezone von erster Härtezone und zweiter Härtezone erneut erwärmt und dadurch angelassen. Dadurch wird der Zwischenbereich gebildet. Durch das erneute Erwärmen und Anlassen des bereits gehärteten Zwischenbereichs ergibt sich die gegenüber dem gehärteten Bereich verringerte Härte des Zwischenbereichs.

Vorzugsweise werden beide Längsseiten gleichzeitig gehärtet. Dadurch lassen geringe Prozesszeiten für den Härtevorgang erzielen. Die Längsseiten werden in einem Durchlaufverfahren gehärtet, bei dem die Führungsschiene in Richtung der Längsmittelachse an zwei in Richtung der Längsmittelachse feststehenden, quer zur Längsmittelachse beweglich angeordneten Induktoren vorbei bewegt wird. Die quer zur Längsmittelachse bewegliche Anordnung der Induktoren ermöglicht, dass die Induktoren der Biegung der Führungsschiene in dem Längsabschnitt folgen können, während sich die Führungsschiene an den Induktoren vorbei bewegt. Die Induktoren sind dabei insbesondere senkrecht zur Längsmittelachse beweglich. Hierdurch kann eine im Rahmen der erzielbaren Toleranzen konstante Tiefe der gehärteten Bereiche erzielt werden. Zumindest ein Teil des Umlenkabschnitts, der die Schienenspitze umfasst, wird mit einem Induktor gehärtet, dessen Form an die Form des zu härtenden Teils des Umlenkabschnitts angepasst ist. Ein Induktor, dessen Form an die Form des zu härtenden Teils angepasst ist, wird auch als Forminduktor bezeichnet. Mit zwei an den Längsseiten der Führungsschiene angeordneten Induktoren ist ein umlaufendes Härten des Umlenkabschnitts nicht ohne Weiteres möglich. Ein Induktor, der an der gesamten Längsseite und dem Umlenkabschnitt der Führungsschiene vorbei bewegt wird, bedingt eine verlängerte Prozesszeit. Problematisch bei Forminduktoren ist, dass die gesamte zu härtende Kontur gleichzeitig gehärtet wird und dadurch der Energieeintrag in die Führungsschiene sehr hoch ist. Dadurch, dass lediglich der Umlenkabschnitt mit einem Forminduktor gehärtet wird, während die Längsseiten der Führungsschiene im Durchlaufverfahren gehärtet werden, kann der Energieeintrag während des Härtens in die Führungsschiene in vertretbarem Maß gehalten werden, und gleichzeitig wird die benötigte Prozesszeit gering gehalten.

Das vorliegende Verfahren zur Herstellung einer Führungsschiene sieht vor, dass die zusammengebaute Führungsschiene lokal induktiv gehärtet wird. Es werden demnach nicht lediglich unmontierte Einzelteile der Führungsschiene, beispielsweise Seitenplatten der Führungsschiene gehärtet und anschließend zusammengebaut, sondern die fertig zusammengebaute Führungsschiene wird im Ganzen lokal gehärtet. Dadurch werden an beiden Seitenplatten gleichzeitig gehärtete Bereiche an den Führungsflächen hergestellt. Auch hierdurch lassen sich Prozesszeiten verringern.

Ausführungsbeispiele der Erfindung werden im Folgenden anhand der Zeichnung erläutert. Es zeigen:
- Fig. 1: eine schematische Seitenansicht einer Motorkettensäge mit einer daran angeordneten Führungsschiene,
- Fig. 2: eine Seitenansicht einer Führungsschiene,
- Fig. 3: eine schematische Schnittdarstellung durch die Führungsschiene in einem Schnitt entlang der Linie III-III in Fig. 2,
- Fig. 4: ein weiteres Ausführungsbeispiel einer Führungsschiene in einer Schnittdarstellung entsprechend Fig. 3,
- Fig. 5: eine schematische Seitenansicht einer Führungsschiene beim Härten des Umlenkabschnitts in einem ersten Verfahrensschritt,
- Fig. 6: eine schematische Seitenansicht der Führungsschiene aus Fig. 5 beim Härten der Längsseiten in einem zweiten Verfahrensschritt,
- Fig. 7: eine schematische Darstellung der Bereiche der Führungsschiene, die mit den unterschiedlichen Induktoren gehärtet werden,
- Fig. 8: eine schematische Darstellung der sich ergebenden gehärteten Bereiche und des Zwischenbereichs der Führungsschiene nach den Härtevorgängen.

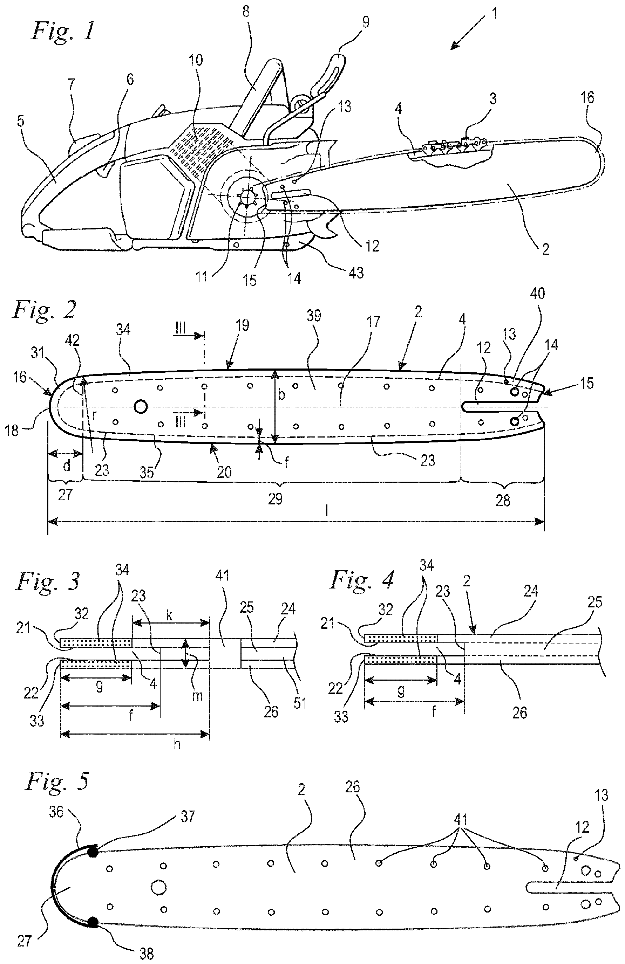

Fig. 1 zeigt schematisch eine Motorkettensäge 1, die eine Führungsschiene 2 aufweist. Die Führungsschiene 2 weist eine Führungsnut 4 auf, in der eine Sägekette 3 umlaufend geführt ist. Die Sägekette 3 ist über ein Antriebsritzel 11 geführt, das im Betrieb von einem Antriebsmotor 10 rotierend angetrieben ist und so die Sägekette 3 am Umfang der Führungsschiene 2 umlaufend bewegt. Der Antriebsmotor 10 ist in Fig. 1 schematisch als Verbrennungsmotor dargestellt. Der Antriebsmotor 10 kann jedoch auch ein von einem Akku oder über ein Kabel mit Energie versorgter Elektromotor sein. Die Führungsschiene 2 weist ein Einspannende 15 auf, an dem die Führungsschiene an einem Gehäuse 43 der Motorkettensäge 1 festgelegt ist. Das Antriebsritzel 11 liegt benachbart zum Einspannende 15. Das dem Gehäuse 43 entfernt angeordnete Ende der Führungsschiene 2 bildet ein freies Ende 16, an dem die Sägekette 3 umgelenkt wird.

Die Führungsschiene 2 weist nahe dem Einspannende 15 einen Führungsschlitz 12 auf, durch den nicht dargestellte Spannelemente ragen, mit denen die Führungsschiene 2 an dem Gehäuse 43 der Motorkettensäge 1 fixiert ist. Die Führungsschiene 2 weist vorteilhaft mindestens eine, im Ausführungsbeispiel zwei Spannöffnungen 14 auf, an denen nicht dargestellte Spannmittel zum Spannen der Sägekette 3 durch Bewegung der Führungsschiene 2 gegenüber dem Gehäuse 43 eingreifen können. Die Führungsschiene 2 weist im Ausführungsbeispiel außerdem mindestens eine Ölzuführöffnung 13 auf, über die von der Außenseite der Führungsschiene 2 in die Führungsnut 4 Schmiermittel wie Öl eingebracht werden kann.

Zum Führen der Motorkettensäge 1 im Betrieb weist die Motorkettensäge 1 einen Handgriff 5 auf, an dem Bedienelemente 6 und 7 gelagert sind. Das Bedienelement 6 kann beispielsweise ein Gashebel und das Bedienelement 7 eine Gashebelsperre sein. Zum Führen der Motorkettensäge 1 ist außerdem ein Griffbügel 8 vorgesehen, der das Gehäuse 43 übergreift. An der der Führungsschiene 2 zugewandten Seite des Griffbügels 8 ist ein Handschutz 9 vorgesehen, der auch zum Auslösen einer nicht dargestellten Kettenbremsvorrichtung dienen kann.

Fig. 2 zeigt die Führungsschiene 2 im Einzelnen. Die Führungsnut 4 weist einen Nutgrund 23 auf, der in Fig. 2 durch eine gestrichelte Linie angedeutet ist. Die Führungsschiene 2 weist eine Längsmittelachse 17 auf, die sich vom Einspannende 15 zum freien Ende 16 der Führungsschiene 2 in der geometrischen Mitte der Führungsschiene 2 erstreckt. Die Führungsschiene 2 weist einen Einspannabschnitt 28 auf, der sich vom Einspannende 15 ausgehend über den gesamten Längsabschnitt der Führungsschiene 2 erstreckt, in dem der Führungsschlitz 12 angeordnet ist. Der Führungsschlitz 12 kann dabei wie in Fig. 2 dargestellt zum Einspannende 15 hin offen oder, wie in Fig. 1 dargestellt, zum Einspannende 15 hin geschlossen sein. Im Einspannabschnitt 28 sind außerdem die Spannöffnungen 14 angeordnet. Vorteilhaft ist auch die mindestens eine Ölzuführöffnung 13 im Einspannabschnitt 28 angeordnet. An dem dem freien Ende 16 der Führungsschiene 2 zugewandten Ende des Führungsschlitzes 12 endet der Einspannabschnitt 28. Im Bereich der Ölzuführöffnung 13 erstreckt sich ein Ölbohrungsbereich 40, der im Folgenden noch näher beschrieben wird.

Die Führungsschiene 2 besitzt eine erste Längsseite 19 und eine zweite Längsseite 20, an denen die Führungsnut 4 entlangläuft. An der ersten Längsseite 19 bewegt sich die Sägekette 3 (Fig. 1) im Betrieb vom Einspannende 15 zum freien Ende 16 und an der zweiten Längsseite 20 bewegt sich die Sägekette 3 im Betrieb vom freien Ende 16 zum Einspannende 15. Am freien Ende 16 der Führungsschiene 2 erstreckt sich ein Umlenkabschnitt 27. Die Führungsschiene 2 weist eine Schienenspitze 18 auf. Die Schienenspitze 18 ist der Bereich, in dem die Längsmittelachse 17 den Umlenkabschnitt 27 in der in Fig. 2 dargestellten Seitenansicht schneidet. Die in Fig. 2 dargestellte Seitenansicht ist eine Ansicht senkrecht auf die Flachseite der Führungsschiene 2. Der Umlenkabschnitt 27 erstreckt sich in Richtung der Längsmittelachse 17 von der Schienenspitze 18 bis zu einer Ebene 42. Die Ebene 42 ist die gedachte Ebene, die senkrecht zur Längsmittelachse 17 liegt und in Seitenansicht auf die Flachseite der Führungsschiene 2, wie in Fig. 2 gezeigt, durch den Punkt verläuft, in dem die Außenkontur der Führungsschiene 2 einen Radius r von 100 mm aufweist. Im Umlenkabschnitt 27 ist der Radius r kleiner als 100 mm. In Richtung der Längsmittelachse 17 verläuft zwischen dem Umlenkabschnitt 27 und dem Einspannabschnitt 28 ein Längsabschnitt 29. Im Längsabschnitt 29 ist der Radius r der Außenkontur der Führungsschiene 2 größer als 100 mm. Der Umlenkabschnitt 27 erstreckt sich vorzugsweise über eine Länge d, die parallel zur Längsmittelachse 17 gemessen ist und die vorzugsweise zwischen 5% und 20% der Gesamtlänge 1 der Führungsschiene 2 beträgt. Die Gesamtlänge 1 ist dabei parallel zur Längsmittelachse 17 gemessen. Die Längsseiten 19 und 20 erstrecken sich sowohl im Längsabschnitt 29 als auch im Einspannabschnitt 28 am Umfang der Führungsschiene 2. Der Umfang der Führungsschiene 2 im Umlenkabschnitt 27 verbindet die beiden Längsseiten 19 und 20.

Im Bereich der Führungsnut 4 weist die Führungsschiene 2 gehärtete Bereiche 31, 34, 35 auf. Ein erster gehärteter Bereich 31 ist weitgehend oder vollständig im Umlenkabschnitt 27 angeordnet. Ein zweiter gehärteter Bereich 34 erstreckt sich an der ersten Längsseite 19 der Führungsschiene, und ein dritter gehärteter Bereich 35 erstreckt sich an der gegenüberliegenden, zweiten Längsseite 20 der Führungsschiene 2. Zumindest der Bereich des Längsabschnitts 29, in dem in einer Ansicht senkrecht auf die Flachseite der Führungsschiene 2 die Längsmittelachse 17 verläuft, bildet einen Mittelbereich 39 der Seitenplatten 24, 26. Im Ausführungsbeispiel erstreckt sich der Mittelbereich 39 mindestens in dem in einer Seitenansicht senkrecht auf die Flachseite der Führungsschiene 2 durch den Nutgrund 23 der Führungsnut 4 umschlossenen Bereich. In den gehärteten Bereichen 31, 34 und 35 ist die Härte gegenüber dem Mittelbereich 39 der Seitenplatten 24, 26 erhöht. Die Härte in mindestens einem, insbesondere allen gehärteten Bereichen 31, 34 und 35 beträgt vorteilhaft mindestens 600 HV10, insbesondere mindestens 630 HV10. Der Mittelbereich 39, der gegenüber den gehärteten Bereichen 31, 34 und 35 eine verringerte Härte aufweist, erstreckt sich vorzugsweise über die gesamte in Fig. 3 eingezeichnete Dicke m der Führungsschiene 2. Die Härte in dem Mittelbereich 39 beträgt vorteilhaft von 400 HV10 bis 600 HV10, insbesondere 420 HV10 bis 460 HV10. Die Führungsschiene 2 weist im Umlenkabschnitt 28 und im Längsabschnitt 29 vorteilhaft unterhalb des Nutgrunds 23 eine geringere Härte auf als an ihrem Umfang, an dem sich die Führungsflächen 32 und 33 erstrecken. Der Bereich unterhalb des Nutgrunds 23 ist aufgrund der weitgehend umlaufenden Gestaltung des Nutgrunds 23 der Bereich, der vom Nutgrund 23 umschlossen ist.

Wie Fig. 2 auch zeigt, weist die Führungsschiene 2 eine Höhe b auf, die senkrecht zur Längsmittelachse 17 und in der Ebene der Führungsschiene 2 gemessen ist. Die Höhe b ist deutlich kleiner als die Gesamtlänge 1 der Führungsschiene 2. Der Mittelbereich 39 erstreckt sich in einer Seitenansicht senkrecht auf die Flachseite der Führungsschiene 2 vorteilhaft über mindestens 50%, insbesondere über mindestens 80% der Höhe b der Führungsschiene 2. Die Dicke m ist senkrecht zur Höhe b und senkrecht zur Längsmittelachse 17 gemessen. Die Führungsnut 4 weist eine Tiefe f auf. Die Tiefe f kann beispielsweise von 0, 5 cm bis 2 cm betragen.

Fig. 3 zeigt in schematischer Schnittdarstellung den Aufbau der Führungsschiene 2 für ein erstes Ausführungsbeispiel. Die Führungsschiene 2 ist im Ausführungsbeispiel nach Fig. 3 aus einer ersten Seitenplatte 24, einer zweiten Seitenplatte 26 sowie einer zwischen den Seitenplatten 24 und 26 angeordneten Mittelplatte 51 aufgebaut. Die Mittelplatte 51 bildet einen Mittelabschnitt 25. Die Mittelplatte 51 ist vorzugsweise als eine durchgehende Platte ausgebildet. Die Führungsschiene 2 ist als Vollschiene, also aus Vollmaterial ohne gewichtsreduzierende Aussparungen im Mittelbereich 39 der Seitenplatten 24, 26 oder im Mittelabschnitt 25 ausgebildet. Die beiden Seitenplatten 24, 25 und die Mittelplatte 51 sind miteinander über eine Vielzahl von Schweißpunkten 41 verbunden. Die Anordnung der Schweißpunkte 41 ist in Fig. 5 schematisch dargestellt.

Wie Fig. 3 zeigt, ist an der Umfangskontur jeder Seitenplatte 24 und 26 eine Führungsfläche 32 bzw. 33 ausgebildet. Die erste Seitenplatte 24 begrenzt eine erste Nutseite 21 der Führungsnut 4 mit ihrer Innenseite und weist an ihrem Umfang die erste Führungsfläche 32 auf. Die zweite Seitenplatte 26 begrenzt eine zweite Nutseite 22 und weist an ihrem Außenumfang die zweite Führungsfläche 33 auf. Der Nutgrund 23, der sich von der ersten Seitenplatte 24 zur zweiten Seitenplatte 26 erstreckt, wird vom Mittelabschnitt 25 gebildet. Die Schweißpunkte 41 weisen zu den Führungsflächen 32 und 33 einen senkrecht zu den Führungsflächen 32, 33 gemessenen Abstand h auf. Der Abstand h ist größer als die Tiefe f der Führungsnut 4. Die Schweißpunkte 41 verlaufen demnach unterhalb des Nutgrunds 23. Im Ausführungsbeispiel erstrecken sich die Schweißpunkte 41 über die gesamte Dicke m der Führungsschiene 2.

In Fig. 3 ist der gehärtete Bereich 34, der an die Führungsflächen 32 und 33 anschließt und sich über die gesamte Dicke m der Führungsschiene 2 erstreckt, schematisch als punktierter Bereich dargestellt. Der gehärtete Bereich 34 erstreckt sich durch beide Seitenplatten 24 und 26 und ist durch die Führungsnut 4 unterbrochen. Der gehärtete Bereich 34 erstreckt sich jedoch nicht bis an den Nutgrund 23. Der gehärtete Bereich 34 weist vorteilhaft eine Härte von mindestens 600 HV10, insbesondere mindestens 630 HV10 auf. Der gehärtete Bereich 34 weist eine senkrecht zu den Führungsflächen 32, 33 gemessene Tiefe g auf, die kleiner als die Tiefe f der Führungsnut 4 ist. Die Tiefe g beträgt vorteilhaft mindestens 1 mm, insbesondere mindestens 1,5 mm. Zu den Schweißpunkten 41 weist der gehärtete Bereich 34 einen Abstand k auf, der senkrecht zu den Führungsflächen 32, 33 gemessen ist. Der Abstand k beträgt vorteilhaft mindestens 6 mm, insbesondere mindestens 8 mm .

Fig. 4 zeigt ein Ausführungsbeispiel für eine alternative Gestaltung der Führungsschiene 2. Bei der in Fig. 4 dargestellten Führungsschiene 2 sind die Seitenplatten 24 und 26 und der Mittelabschnitt 25 einteilig ausgebildet. Die Schweißpunkte 41 entfallen daher bei dieser Ausführung. Gestaltung und Abmessung der Führungsflächen 32, 33, der Führungsnut 4 sowie des gehärteten Bereichs 34 entspricht der zu Fig. 3 beschriebenen Gestaltung. Die gehärteten Bereiche 31 und 35 weisen eine Tiefe g auf, die der in den Figuren 3 und 4 dargestellten und beschriebenen Tiefe g des gehärteten Bereichs 34 entspricht. Die Tiefe f der Führungsnut 4 ist vorzugsweise weitgehend konstant über die gesamte Länge der Führungsnut 4. Weitgehend konstant meint hierbei, dass die Tiefe f der Führungsnut 4 über die gesamte Länge der Führungsnut 4 um höchstens 10% der mittleren Tiefe f der Führungsnut 4 variiert. Lediglich im Bereich von Ölzuführöffnungen 13 oder dgl. kann sich eine abweichende Tiefe f der Führungsnut 4 ergeben.

In alternativer Gestaltung kann vorgesehen sein, dass der Mittelabschnitt 25 mit einer der Seitenplatten 24 und 26 einteilig ausgebildet und mit der anderen Seitenplatte 24, 26 beispielsweise über Schweißpunkte 41 verbunden ist. Alternativ kann auch vorgesehen sein, dass ein Teil des Mittelabschnitts 25 einteilig mit der Seitenplatte 24 und ein weiterer Teil des Mittelabschnitts 25 einteilig mit der Seitenplatte 26 ausgebildet ist und die beiden Seitenplatten 24 und 26 über Schweißpunkte 41 miteinander verbunden sind.

Fig. 5 zeigt schematisch die Führungsschiene 2 bei der Herstellung. Die Seitenplatten 24 und 26 und der Mittelabschnitt 25 sind bereits durch Schweißpunkte 41 verbunden.

In einem ersten Härteschritt wird der gehärtete Bereich 31 im Umlenkabschnitt 27 hergestellt. Hierzu wird die Führungsschiene 2 partiell induktiv gehärtet. Im Ausführungsbeispiel ist hierfür ein Induktor 36 vorgesehen. Bei dem Induktor 36 handelt es sich vorzugsweise um einen sogenannten Forminduktor, dessen Form an die Form des zu härtenden Teils des Umlenkabschnitts 27 angepasst ist. Mit dem Induktor 36 wird der gesamte Bereich 31 gleichzeitig induktiv erhitzt und dadurch gehärtet. Die Führungsschiene 2 wird in dem ersten Härteschritt nur lokal gehärtet, nämlich am Umfang des freien Endes 16. Die Härtung erfolgt zumindest an der Schienenspitze 18, vorteilhaft an mindestens 75%, insbesondere an 100% des Umfangs des Umlenkabschnitts 27. Es kann zweckmäßig sein, dass in dem ersten Härteschritt auch die Längsseiten 19, 20 in einem an den Umlenkabschnitt 29 unmittelbar angrenzenden Teil des Längsabschnitts 29 gehärtet werden.

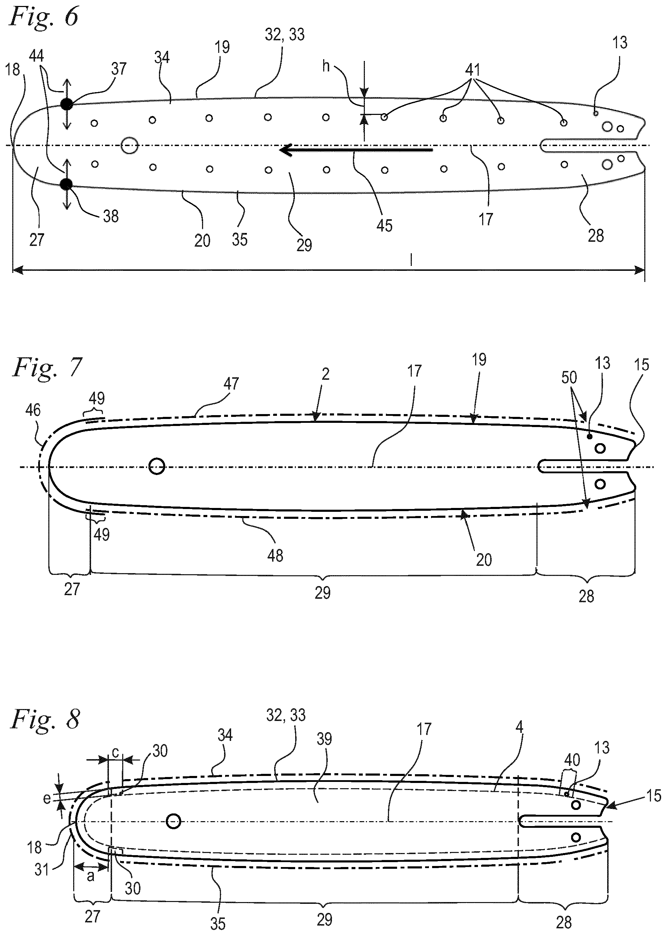

In Fig. 5 sind außerdem zwei Induktoren 37 und 38 dargestellt, die nach dem Härten des gehärteten Bereichs 31 am Umlenkabschnitt 27 zum Einsatz kommen. Dies ist in Fig. 6 schematisch dargestellt. Die Induktoren 37 und 38 erstrecken sich lediglich über einen geringen Teil der Gesamtlänge 1 der Führungsschiene 2. Das Härten der Längsseiten 19 und 20 erfolgt vorzugsweise nach dem Härten der Schienenspitze 18. Die gehärteten Bereiche 34 und 35 werden vorzugsweise in einem Durchlaufverfahren induktiv gehärtet. Bei dem Durchlaufverfahren bewegt sich die Führungsschiene 2 vorteilhaft in Richtung des Pfeils 45 an den Induktoren 37 und 38 entlang. Um die unterschiedliche Höhe b der Führungsschiene 2 über ihre Gesamtlänge 1 senkrecht zur Längsmittelachse 17 ausgleichen zu können, sind die Induktoren 37 und 38 in Richtung der Doppelpfeile 44 senkrecht zur Längsmittelachse 17 beweglich. Dadurch können die Induktoren 37 und 38 dem Verlauf der Führungsflächen 32 und 33 folgen. Die von den Induktoren 37 und 38 erzeugten gehärteten Bereiche 34 und 35 erstrecken sich dabei nicht bis an die Schweißpunkte 41. Die Führungsschiene 2 wird in dem zweiten Härteschritt nur lokal gehärtet, nämlich an ihrem Umfang an den Längsseiten 19 und 20. Die Härtung erfolgt zumindest an je 75%, insbesondere je 100% der Umfangslänge der Längsseiten 19 und 20. Es kann zweckmäßig sein, dass hierbei auch ein an die Längsseiten 19, 20 unmittelbar angrenzender Teil des Umlenkabschnitts 27 gehärtet wird.

Fig. 7 zeigt die Härtezonen 46, 47 und 48, an denen die Induktoren 36, 37 und 38 auf die Führungsschiene 2 eingewirkt haben. Die Härtezone 46 erstreckt sich vorzugsweise über einen Großteil des Umlenkabschnitts 27. Im Ausführungsbeispiel erstreckt sich die Härtezone 46, an der der Induktor 36 die Führungsschiene 2 erhitzt, über den gesamten Umlenkabschnitt 27 bis in den Längsabschnitt 29 hinein. Die Härtezonen 47 und 48 beginnen im Ausführungsbeispiel im Umlenkabschnitt 27. Es kann jedoch auch vorgesehen sein, dass die Härtezonen 47 und 48 erst im Längsabschnitt 29 beginnen. Die Härtezonen 47 und 48 erstrecken sich vorzugsweise bis zum Einspannende 15 der Führungsschiene 2. Im Bereich der Ölzuführöffnung 13 weist die Härtezone 47 eine Unterbrechung 50 auf. Zur Erzeugung der Unterbrechung 50 wird der Induktor 37 kurzzeitig abgeschaltet, wenn die Ölzuführöffnung 13 am Induktor 37 entlangbewegt wird. Dadurch entsteht der in Fig. 8 schematisch dargestellte Ölbohrungsbereich 40, dessen Härte geringer ist als die Härte der gehärteten Bereiche 31, 34 und 35. Die Härte des Ölbohrungsbereichs 40 entspricht vorzugsweise der Härte des Mittelbereichs 39. Wie Fig. 7 auch zeigt, ist auch an der gegenüberliegenden Längsseite 20 eine Unterbrechung 50 vorgesehen, die durch Abschalten des Induktors 38 gebildet wird. Die Unterbrechung 50 an der zweiten Längsseite 20 ist im Bereich einer in Fig. 7 nicht dargestellten, von der nicht sichtbaren Außenseite der Führungsschiene eingebrachten Ölzuführöffnung 13 vorgesehen. Die zweite Ölzuführöffnung 13 befindet sich an der Position der dargestellten Ölzuführöffnung 13 und dient zur Ölzuführung, wenn die Führungsschiene 2 um 180° um ihre Längsmittelachse 17 gewendet wird.

Fig. 8 zeigt schematisch die Lage der gehärteten Bereiche 31, 34 und 35 am Außenumfang der Führungsschiene 2 durch strichpunktierte Linien. Tatsächlich befinden sich die gehärteten Bereiche 31, 34 und 35 in den Seitenplatten 24 und 26, wie in den Figuren 3 und 4 dargestellt. Die Härtezonen 46 und 47 bzw. 46 und 48 überlappen sich jeweils in einem Überlappungsbereich 49. In dem Überlappungsbereich 49 wird das Material der Führungsschiene 2 zunächst durch den Induktor 36 gehärtet und anschließend beim erneuten Erwärmen durch die Induktoren 37 und 38 angelassen. Dadurch verringert sich die Härte in den Überlappungsbereichen 49 wieder. In den Überlappungsbereichen 49 werden dadurch Zwischenbereiche 30 der Führungsschiene 2 gebildet, die sich an den Führungsflächen 32 und 33 zwischen den gehärteten Bereichen 31 und 34 bzw. 31 und 35 erstrecken. Mindestens ein Zwischenbereich 30, vorzugsweise beide Zwischenbereiche 30 weisen zur Schienenspitze 18 vorzugsweise einen Abstand a auf, der von 40% bis 70% der Höhe b der Führungsschiene 2 beträgt. Der Zwischenbereich 30 weist vorzugsweise eine parallel zur Längsmittelachse 17 gemessene Länge c von weniger als 20 mm, insbesondere weniger als 15 mm, bevorzugt weniger als 10 mm auf. Die senkrecht zur Führungsfläche 32, 33 gemessene Tiefe e des Zwischenbereichs 30 ist vorzugsweise kleiner als die Tiefe f der Führungsnut 4. Die Tiefe e des Zwischenbereichs 30 beträgt vorzugsweise weniger als 20% der Höhe b der Führungsschiene 2.

Die Härte im Zwischenbereich 30 ist vorzugsweise größer als die Härte im Mittelbereich 39, aber kleiner als die Härte in den gehärten Bereichen 31, 34 und 35. Die Härte im Zwischenbereich 30 kann auch der Härte im Mittelbereich 39 entsprechen. Demnach wird der Zwischenbereich 30 gegenüber dem Mittelbereich 39 zunächst gehärtet. Diese vergrößerte Härte sinkt beim nachfolgenden Anlassen teilweise oder vollständig. Die Härte des Zwischenbereichs 30 kann bis auf die Härte des Mittelbereichs 39 abgesenkt werden. Die Härte des Zwischenbereichs 30 nach dem Härten und Anlassen kann der Härte des Zwischenbereichs 30 vor dem Härten entsprechen. Die Härte im Zwischenbereich 30 beträgt vorteilhaft mindestens 400 HV10, insbesondere mindestens 440 HV10. Die Unterbrechungen 50 bilden Ölbohrungsbereiche 40 im Bereich der mindestens einen Ölzuführöffnung 13, in denen die Härte vorzugsweise der Härte des Grundmaterials, also der Härte des Mittelbereichs 39, entspricht. Die Härte in dem mindestens einen Ölbohrungsbereich 40 ist vorzugsweise kleiner als die Härte in dem mindestens einen Zwischenbereich 30.

Vorzugsweise werden beide Längsseiten 19, 20 gleichzeitig gehärtet. Es kann jedoch auch vorgesehen sein, dass die beiden Längsseiten 19 und 20 nacheinander gehärtet werden, vorzugsweise ebenfalls in einem Durchlaufverfahren. Die Induktoren 37 und 38 sind vorzugsweise in Richtung der Längsmittelachse 17 feststehend angeordnet.

In vorteilhafter alternativer Gestaltung erfolgt der zweite Härteschritt zeitlich vor dem ersten Härteschritt. Demnach wird zumindest ein Großteil der Längsseiten 19 und 20 gehärtet und in einem zeitlich nachfolgenden Verfahrensschritt wird die Schienenspitze 18 und zumindest ein Teil des Umlenkbereichs 27 gehärtet.

## Patentansprüche

1. Führungsschiene für eine Motorkettensäge, wobei die Führungsschiene (2) einen Einspannabschnitt (28) und ein freies Ende (16) aufweist, wobei an dem freien Ende (16) ein Umlenkabschnitt (27) angeordnet ist, wobei die Führungsschiene (2) zwei einteilige Seitenplatten (24, 26) aufweist, wobei die Seitenplatten (24, 26) sich vom Einspannabschnitt (28) zum Umlenkabschnitt (27) erstrecken und den Umlenkabschnitt (27) bilden, wobei die Führungsschiene (2) eine umlaufende Führungsnut (4) aufweist, wobei die Führungsschiene (2) eine Schienenspitze (18) aufweist, an der eine Längsmittelachse (17) der Führungsschiene (2) den Umlenkabschnitt (27) schneidet, wobei die Führungsschiene (2) eine erste Längsseite (19) und eine zweite Längsseite (20) aufweist, und wobei an jeder Seitenplatte (24, 26) eine Führungsfläche (32, 33) ausgebildet ist, die sich durchgängig über die erste Längsseite (19) der Führungsschiene (2), den Umlenkabschnitt (27) und die zweite Längsseite (20) der Führungsschiene (2) erstreckt,
**dadurch gekennzeichnet, dass** die Führungsflächen (32, 33) der Seitenplatten (24, 26) sowohl an den Längsseiten (19, 20) als auch an der Schienenspitze (18) zumindest je einen gehärteten Bereich (31, 34) mit gegenüber einem Mittelbereich (39) der Seitenplatten (24, 26) erhöhter Härte aufweisen, dass sich an den Führungsflächen (32, 33) zwischen den Längsseiten (19, 20) und dem Umlenkabschnitt (27) jeweils ein Zwischenbereich (30) erstreckt, der eine geringere Härte als der gehärtete Bereich (31, 34, 35) aufweist und
- dass der Zwischenbereich (30) in einem parallel zur Längsmittelachse (17) gemessenen Abstand (a) zur Schienenspitze (18) angeordnet ist, wobei der Abstand (a) von 40% bis 70% der Höhe (b) der Führungsschiene (2) beträgt und/ oder
- dass der Zwischenbereich (30) eine parallel zur Längsmittelachse (17) gemessene Länge (c) von weniger als 20 mm aufweist.

2. Führungsschiene nach Anspruch 1,
**dadurch gekennzeichnet, dass** der Umlenkabschnitt (27) sich von der Schienenspitze (18) bis zu einer Ebene (42) erstreckt, die senkrecht zur Längsmittelachse (17) durch den Punkt verläuft, in dem der Radius (r) mindestens einer Führungsfläche (32, 33) 100 mm beträgt, und dass der Zwischenbereich (30) mindestens teilweise außerhalb des Umlenkabschnitts (27) angeordnet ist.

3. Führungsschiene nach Anspruch 1 oder 2,
**dadurch gekennzeichnet, dass** der Zwischenbereich (30) eine senkrecht zur Führungsfläche (32, 33) gemessene Tiefe (e) aufweist, die kleiner als die Tiefe (f) der Führungsnut (4) ist.

4. Führungsschiene nach einem der Ansprüche 1 bis 3,
**dadurch gekennzeichnet, dass** die Tiefe (e) des Zwischenbereichs (30) weniger als 20% der Höhe (b) der Führungsschiene (2) beträgt.

5. Führungsschiene nach einem der Ansprüche 1 bis 4,
**dadurch gekennzeichnet, dass** die Führungsschiene (2) einen zwischen den Seitenplatten (24, 26) angeordneten Mittelabschnitt (25) aufweist.

6. Führungsschiene nach Anspruch 5,
**dadurch gekennzeichnet, dass** der Mittelabschnitt (25) mit mindestens einer Seitenplatte (24, 26) der Führungsschiene (2) als ein einteiliges Element ausgebildet ist.

7. Führungsschiene nach Anspruch 5,
**dadurch gekennzeichnet, dass** der Mittelabschnitt (25) und die Seitenplatten (24, 26) separat voneinander ausgebildet und durch Schweißpunkte (41) miteinander verbunden sind.

8. Führungsschiene nach Anspruch 7,
**dadurch gekennzeichnet, dass** der gehärtete Bereich (31, 34, 35) zu den Schweißpunkten (41) einen Abstand (k) aufweist.

9. Verfahren zur Herstellung einer Führungsschiene nach einem der Ansprüche 1 bis 8,
**dadurch gekennzeichnet, dass** die Führungsschiene (2) sowohl an den Längsseiten (19, 20) als auch an der Schienenspitze (18) induktiv gehärtet wird, dass in einem Verfahrensschritt die Schienenspitze (18) gehärtet wird, wobei zumindest ein Teil des Umlenkabschnitts (27), der die Schienenspitze (18) umfasst, mit einem Induktor gehärtet wird, dessen Form an die Form des zu härtenden Teils des Umlenkabschnitts angepasst ist, und in einem anderen, zeitlich getrennt erfolgenden Verfahrensschritt die Längsseiten (19, 20) in einem Durchlaufverfahren gehärtet werden, bei dem die Führungsschiene (2) in Richtung der Längsmittelachse (17) an zwei in Richtung der Längsmittelachse (17) feststehenden, quer zur Längsmittelachse (17) beweglich angeordneten Induktoren (37, 38) vorbei bewegt wird.

10. Verfahren nach Anspruch 9,
**dadurch gekennzeichnet, dass** das Härten des Umlenkabschnitts (27) in einer ersten Härtezone (46) und das Härten der Längsseiten (19, 29) in mindestens einer zweiten Härtezone (47, 48) erfolgt, wobei sich die erste Härtezone (46) und die mindestens eine zweite Härtezone (47, 48) in mindestens einem Überlappungsbereich (49) überlappen, so dass das Material in dem Überlappungsbereich (49) nach dem Härten einer der Härtezonen (46, 47, 48) von erster Härtezone (46) und zweiter Härtezone (47, 48) beim Härten der anderen Härtezone (46, 47, 48) von erster Härtezone (46) und zweiter Härtezone (47, 48) erneut erwärmt und dadurch angelassen wird, wodurch der Zwischenbereich (30) gebildet wird.

## Claims

1. Guide bar for a motor-driven chainsaw, wherein the guide bar (2) has a clamping section (28) and a free end (16), wherein a redirection section (27) is arranged at the free end (16), wherein the guide bar (2) has two single-part side plates (24, 26), wherein the side plates (24, 26) extend from the clamping section (28) to the redirection section (27) and form the redirection section (27), wherein the guide bar (2) has a peripheral guide groove (4), wherein the guide bar (2) has a bar tip (18) at which a longitudinal central axis (17) of the guide bar (2) intersects the redirection section (27), wherein the guide bar (2) has a first longitudinal side (19) and a second longitudinal side (20), and wherein a guide surface (32, 33) is formed on each side plate (24, 26), said guide surface extending continuously over the first longitudinal side (19) of the guide bar (2), the redirection section (27) and the second longitudinal side (20) of the guide bar (2),
**characterized in that** the guide surfaces (32, 33) of the side plates (24, 26) both on the longitudinal sides (19, 20) and on the bar tip (18) each have at least one hardened region (31, 34) with a hardness which is increased in comparison to a central region (39) of the side plates (24, 26), **in that** a respective intermediate region (30) which is less hard than the hardened region (31, 34, 35) extends on the guide surfaces (32, 33) between the longitudinal sides (19, 20) and the redirection section (27), and
- **in that** the intermediate region (30) is arranged at a distance (a) from the bar tip (18), as measured parallel to the longitudinal central axis (17), the distance (a) being from 40% to 70% of the height (b) of the guide bar (2),
and/or
- **in that** the intermediate region (30) has a length (c) of less than 20 mm, as measured parallel to the central longitudinal axis (17).

2. Guide bar according to Claim 1,
**characterized in that** the redirection section (27) extends from the bar tip (18) as far as a plane (42) which runs perpendicularly to the longitudinal central axis (17) through the point at which the radius (r) of at least one guide surface (32, 33) is 100 mm, and **in that** the intermediate region (30) is at least partially arranged outside the redirection section (27).

3. Guide bar according to Claim 1 or 2,
**characterized in that** the intermediate region (30) has a depth (e) which is smaller than the depth (f) of the guide groove (4), as measured perpendicularly to the guide surface (32, 33).

4. Guide bar according to one of Claims 1 to 3,
**characterized in that** the depth (e) of the intermediate region (30) is less than 20% of the height (b) of the guide bar (2).

5. Guide bar according to one of Claims 1 to 4,
**characterized in that** the guide bar (2) has a central section (25) arranged between the side plates (24, 26).

6. Guide bar according to Claim 5,
**characterized in that** the central section (25) is formed as a single-part element together with at least one side plate (24, 26) of the guide bar (2).

7. Guide bar according to Claim 5,
**characterized in that** the central section (25) and the side plates (24, 26) are formed separately from each other and are connected to each other via welding spots (41).

8. Guide bar according to Claim 7,
**characterized in that** the hardened region (31, 34, 35) is at a distance (k) from the welding spots (41).

9. Method for producing a guide bar according to one of Claims 1 to 8, **characterized in that** the guide bar (2) is inductively hardened both on the longitudinal sides (19, 20) and on the bar tip (18), **in that** the bar tip (18) is hardened in one method step, at least part of the redirection section (27) comprising the bar tip (18) being hardened with an inductor, the shape of which is matched to the shape of that part of the redirection section which is to be hardened, and, in another method step taking place separately in terms of time, the longitudinal sides (19, 20) are hardened in a continuous operation in which the guide bar (2) is moved in the direction of the longitudinal central axis (17) past two inductors (37, 38) which are fixed in the direction of the longitudinal central axis (17) and are arranged movably transversely with respect to the longitudinal central axis (17).

10. Method according to Claim 9,
**characterized in that** the hardening of the redirection section (27) takes place in a first hardening zone (46) and the hardening of the longitudinal sides (19, 29) in at least one second hardening zone (47, 48), the first hardening zone (46) and the at least one second hardening zone (47, 48) overlapping in at least one overlapping region (49) such that, after the hardening of one of the hardening zones (46, 47, 48) of first hardening zone (46) and second hardening zone (47, 48), the material in the overlapping region (49) is reheated, and thereby tempered, during the hardening of the other hardening zone (46, 47, 48) of first hardening zone (46) and second hardening zone (47, 48), as a result of which the intermediate region (30) is formed.

## Revendications

1. Rail de guidage pour une tronçonneuse à chaîne, dans lequel le rail de guidage (2) présente une partie de serrage (28) et une extrémité libre (16), dans lequel une partie de renvoi (27) est disposée à l'extrémité libre (16), dans lequel le rail de guidage (2) présente deux plaques latérales monobloc (24, 26), dans lequel les plaques latérales (24, 26) s'étendent de la partie de serrage (28) à la partie de renvoi (27) et constituent la partie de renvoi (27), dans lequel le rail de guidage (2) présente une rainure de guidage périphérique (4), dans lequel le rail de guidage (2) présente une tête de rail (18) à laquelle un axe médian longitudinal (17) du rail de guidage (2) croise la partie de renvoi (27), dans lequel le rail de guidage (2) présente une première face longitudinale (19) et une deuxième face longitudinale (20), et dans lequel sur chaque plaque latérale (24, 26) une surface de guidage (32, 33) est réalisée qui s'étend en continu sur la première face longitudinale (19) du rail de guidage (2), la partie de renvoi (27) et la deuxième face longitudinale (20) du rail de guidage (2),
**caractérisé en ce que** les surfaces de guidage (32, 33) des plaques latérales (24, 26) présentent à la fois sur les faces longitudinales (19, 20) et au niveau de la tête de rail (18) au moins respectivement une zone trempée (31, 34) ayant une dureté accrue par rapport à une zone centrale (39) des plaques latérales (24, 26), **en ce que** sur les surfaces de guidage (32, 33), entre les faces longitudinales (19, 20) et la partie de renvoi (27), s'étend respectivement une zone intermédiaire (30) qui présente une dureté inférieure à la zone trempée (31, 34, 35), et
- **en ce que** la zone intermédiaire (30) est disposée à une distance (a) de la tête de rail (18) mesurée en parallèle à l'axe médian longitudinal (17), la distance (a) mesurant de 40 % à 70 % de la hauteur (b) du rail de guidage (2),
et/ou
- **en ce que** la zone intermédiaire (30) présente une longueur (c) de moins de 20 mm, mesurée en parallèle à l'axe médian longitudinal (17).

2. Rail de guidage selon la revendication 1,
**caractérisé en ce que** la partie de renvoi (27) s'étend de la tête de rail (18) jusqu'à un plan (42) qui s'étend perpendiculairement à l'axe médian longitudinal (17) à travers le point où le rayon (r) d'au moins une surface de guidage (32, 33) mesure 100 mm, et **en ce que** la zone intermédiaire (30) est disposée au moins partiellement en dehors de la partie de renvoi (27).

3. Rail de guidage selon la revendication 1 ou 2,
**caractérisé en ce que** la zone intermédiaire (30) présente une profondeur (e) mesurée perpendiculairement à la surface de guidage (32, 33) et qui est inférieure à la profondeur (f) de la rainure de guidage (4).

4. Rail de guidage selon l'une quelconque des revendications 1 à 3,
**caractérisé en ce que** la profondeur (e) de la zone intermédiaire (30) mesure moins de 20 % de la hauteur (b) du rail de guidage (2).

5. Rail de guidage selon l'une quelconque des revendications 1 à 4,
**caractérisé en ce que** le rail de guidage (2) présente une partie centrale (25) disposée entre les plaques latérales (24, 26).

6. Rail de guidage selon la revendication 5,
**caractérisé en ce que** la partie centrale (25) est réalisée avec au moins une plaque latérale (24, 26) du rail de guidage (2) comme un élément monobloc.

7. Rail de guidage selon la revendication 5,
**caractérisé en ce que** la partie centrale (25) et les plaques latérales (24, 26) sont réalisées séparément les unes des autres et sont reliées ensemble par des points de soudage (41).

8. Rail de guidage selon la revendication 7,
**caractérisé en ce que** la zone trempée (31, 34, 35) présente une distance (k) par rapport aux points de soudage (41).

9. Procédé de fabrication d'un rail de guidage selon l'une quelconque des revendications 1 à 8,
**caractérisé en ce que** le rail de guidage (2) est trempé par induction à la fois sur les faces longitudinales (19, 20) et au niveau de la tête de rail (18), **en ce que** dans une étape de procédé, la tête de rail (18) est trempée, dans lequel au moins une portion de la partie de renvoi (27) comprenant la tête de rail (18) est trempée par un inducteur dont la forme est adaptée à la forme de la portion à tremper de la partie de renvoi, et dans une autre étape de procédé, effectuée séparément dans le temps, les faces longitudinales (19, 20) sont trempées dans un procédé en continu dans lequel le rail de guidage (2) est amené à passer dans la direction de l'axe médian longitudinal (17) devant deux inducteurs (37, 38) fixes dans la direction de l'axe médian longitudinal (17), disposés de manière mobile transversalement à l'axe médian longitudinal (17).

10. Procédé selon la revendication 9,
**caractérisé en ce que** la trempe de la partie de renvoi (27) est effectuée dans une première zone de trempe (46) et la trempe des faces longitudinales (19, 29) est effectuée dans au moins une deuxième zone de trempe (47, 48),
dans lequel la première zone de trempe (46) et ladite au moins une deuxième zone de trempe (47, 48) se chevauchent au moins dans une zone de chevauchement (49) de sorte que la matière dans la zone de chevauchement (49), après la trempe d'une des zones de trempe (46, 47, 48) de la première zone de trempe (46) et de la deuxième zone de trempe (47, 48), est réchauffée lors de la trempe de l'autre zone de trempe (46, 47, 48) de la première zone de trempe (46) et de la deuxième zone de trempe (47, 48) et reste ainsi activée de façon à former la zone intermédiaire (30).
